Europäisches Patentamt

European Patent Office

Office européen des brevets

(11) Numéro de publication: **0 283 409**
**A1**

## (12) DEMANDE DE BREVET EUROPEEN

(21) Numéro de dépôt: **88420069.2**

(22) Date de dépôt: **24.02.88**

(51) Int. Cl.⁴: **G 02 C 9/00**

(30) Priorité: **26.02.87 FR 8703193**

(43) Date de publication de la demande:
**21.09.88 Bulletin 88/38**

(84) Etats contractants désignés:
**AT BE CH DE ES FR GB GR IT LI NL SE**

(71) Demandeur: **Meillet, Michel**
**Centre Commercial Le Plateau La Duchere**
**F-69009 Lyon (FR)**

(72) Inventeur: **Meillet, Michel**
**Centre Commercial Le Plateau La Duchere**
**F-69009 Lyon (FR)**

(74) Mandataire: **Maisonnier, Jean**
**Bureau Maisonnier 28 Rue Servient**
**F-69003 Lyon (FR)**

(54) **Lunettes, notamment pour le maquillage.**

(57) L'invention concerne une paire de lunettes pour maquiller ou examiner les yeux.

L'oculaire unique (8), (9), (10) peut pivoter autour de son axe (7) et venir s'appliquer contre l'un ou l'autre des cadres (2), (3). Chacun de ceux-ci ne comporte aucune partie supérieure.

Application: prix de revient réduit; absence d'obstacle pour observer la partie supérieure des yeux

Fig .1

## Description

" LUNETTES , NOTAMMENT POUR LE MAQUILLAGE "

La présente invention est relative à une paire de lunettes d'un type nouveau, spécialement prévue pour effectuer des opérations de maquillage, ou pour des observations médicales ou physiologiques. D'une manière générale, il s'agit d'une paire de lunettes permettant à la personne qui l'utilise, d'observer l'un de ses yeux avec l'autre oeil devant lequel se trouve un verre correcteur, par exemple un verre grossissant.

Pour résoudre ce problème, divers systèmes sont connus, qui, tous, présentent des inconvénients, aussi bien en ce qui concerne la facilité d'utilisation, que leur prix de revient élevé. En particulier, la plupart des systèmes connus présentent deux verres amovibles, un pour chaque oeil.

La présente invention a pour but d'éviter ces inconvénients, en réalisant une paire de lunettes de maquillage à la fois pratique et peu coûteuse.

Une paire de lunettes selon l'invention comporte une monture formée d'une face et de deux branches, la face étant constituée par deux cadres reliés au-dessus de nez par une barette transversale horizontale, et elle est caractérisée en ce que, sur l'avant de la barrette, est prévu un pivot vertical, sur lequel est articulé un oculaire, qui peut ainsi être rabattu à volonté vers la droite devant l'oeil droit, ou vers la gauche, devant l'oeil gauche.

Suivant une autre caractéristique de l'invention, l'oculaire possède, autour de son pivot, une amplitude de débattement supérieure ou égale à 180 degrés.

Suivant une autre caractéristique de l'invention, l'oculaire des deux cadres de vision de la face de monture relie la barrette du nez à la branche qui lui correspond, uniquement parsa partie inférieure à profil incurvé alors qu'il ne possède aucune partie supérieure. Ainsi, aucune partie fixe ne se trouve devant la zone supérieure des yeux, ce qui facilite l'observation ou le maquillage des cils ou des paupières.

Suivant une autre caractéristique de l'invention, chacun des deux cadres de vision de la face de monture relie la barrette de nez à la branche qui lui correspond, uniquement par sa partie supérieure à profil incurvé alors qu'il ne possède aucune partie inférieure. Ainsi, aucune partie fixe ne se trouve devant la zone inférieure des yeux, ce qui facilite l'observation ou le maquillage de la partie correspondante du visage.

Le dessin annexé, donné à titre d'exemple non limitatif , permettra de mieux comprendre les caractéristiques de l'invention, et les avantages qu'elle est susceptible de procurer.

Figures 1, 2 et 3, montrent trois attitudes d'une femme utilisant pour se maquiller les yeux une paire de lunettes selon l'invention, à cadres de vision inférieurs.

Figures 4, 5 et 6 montrent le détail de la paire de lunettes, respectivement dans le cas des figures 1, 2 et 3

Figures 7 et 8 correspondent à des variantes où le cadre de vision est situé à la partie supérieure de la monture.

La paire de lunettes 1 illustrée sur les dessins possède une face formée de deux cadres de vision 2 et 3 reliés audessus du nez par une barrette transversale horizontale 4. Sur les côtés des cadres 2et 3, sont articulées, à la manière connue, deux branches 5 et 6.

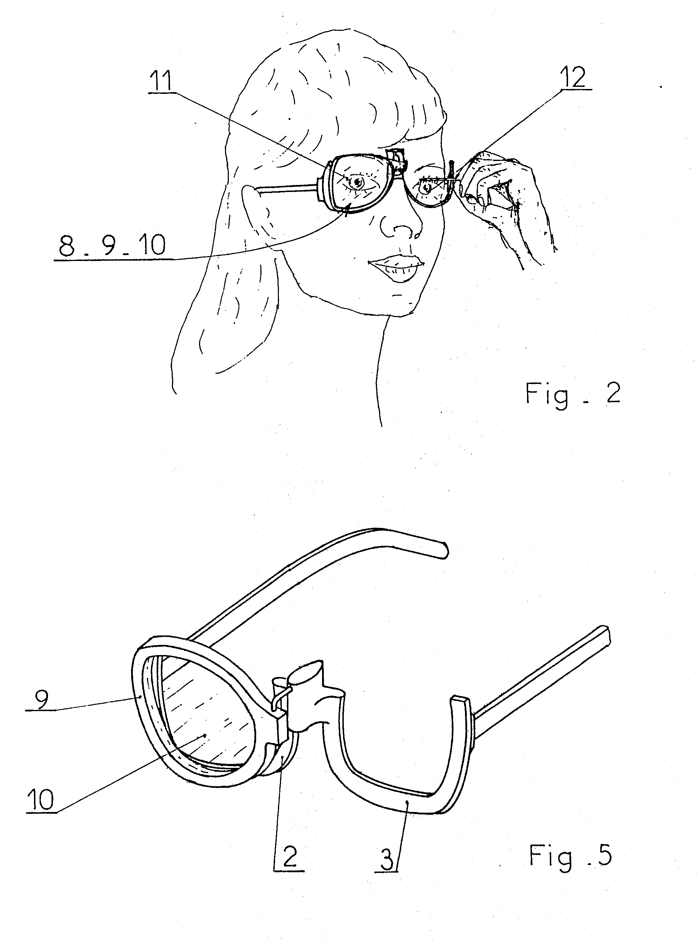

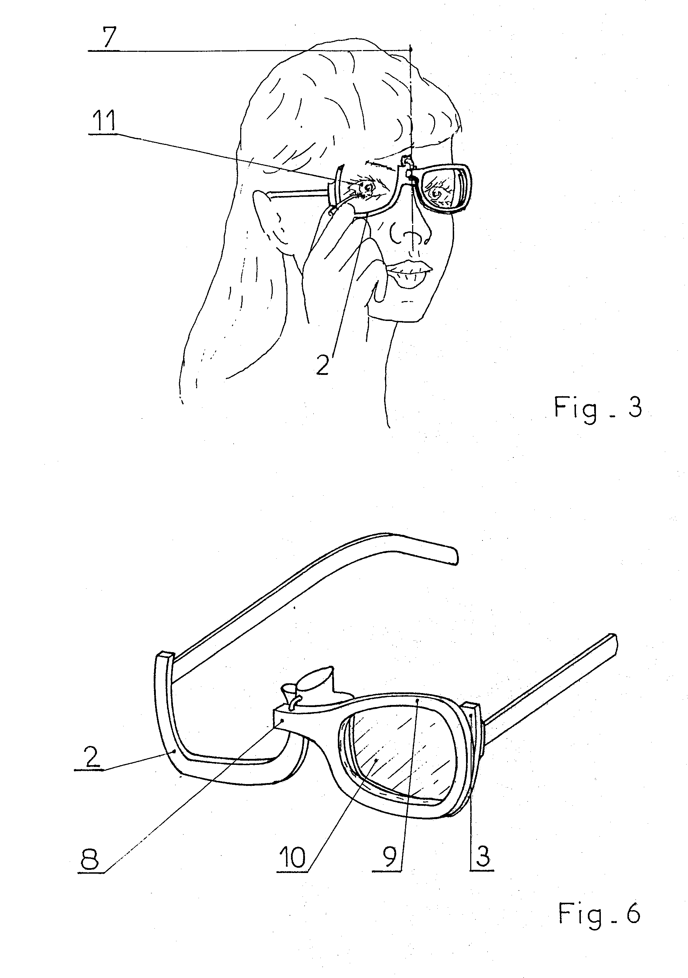

Sur l'avant de la barette 4 est prévu un pivot vertical 7, sur lequel est articulée une patte 8 d'un cadre 9. Ce dernier cercle un verre oculaire 10. En service, l'utilisatrice peut basculer à volonté l'ensemble oculaire 8,9 , 10 :
- soit contre la partie avant du cadre 2 (figures 2 et 5)
- soit contre la partie avant du cadre 3 (figures 3 et 6)

Enfin, on remarquera que chaque cadre 2, 3 est dépourvu de toute partie supérieure pour relier la traverse 4 à la branche 5 ou 6. Chaque cadre 2, 3 a un profil incurvé, situé entièrement au-dessous du rayon visuel de l'oeil 11, 12 intéressé.

Le fonctionnement est le suivant:

Quand l'utilisatrice porte la paire de lunettes selon l' l'invention, elle peut rabattre vers la droite l'oculaire 8, 9, 10 qui se trouve alors appliqué contre l'avant du cadre 2 correspondant à son oeil droit 11 (figures 2 et 5). Ainsi, lorsqu'elle se place devant un miroir (non représenté), son oeil droit 11 bénéficie d'une vision à travers le verre grossissant ou correcteur 10, pour observer son oeil gauche 12 et procéder à son maquillage.

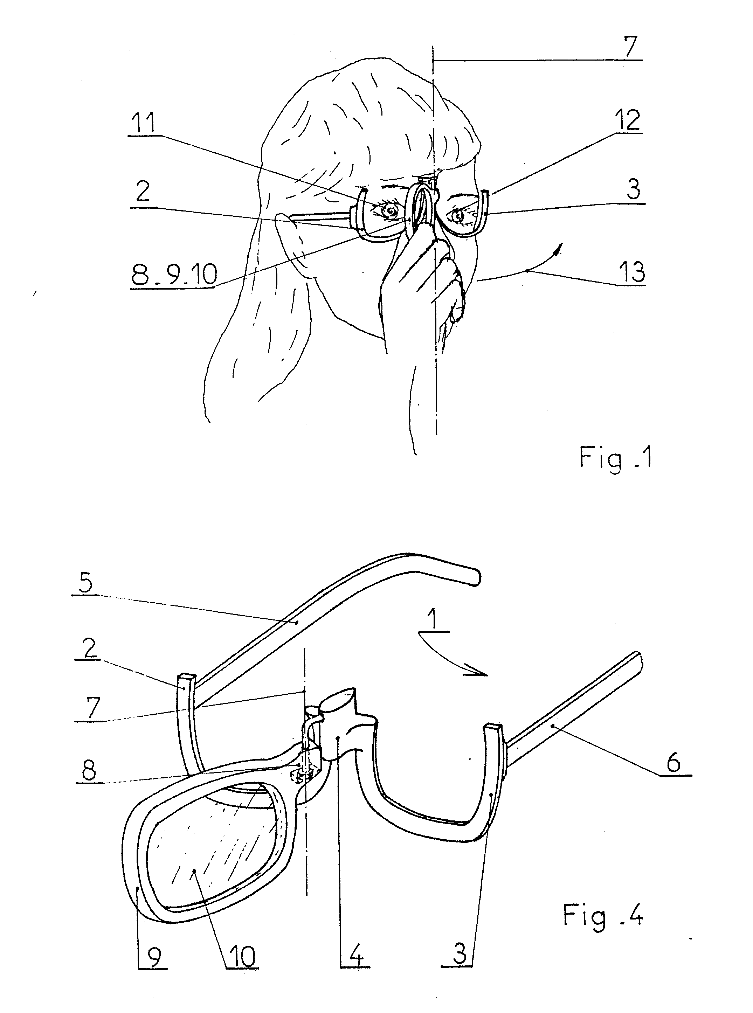

Pour passer au maquillage de l'oeil droit 11, il lui suffit de faire pivoter l'oculaire 8, 9, 10 vers la gauche (figures 1 et 4, flèche 13), jusqu'à l'appliquer contre le cadre gauche 3 (figures 3 et 6).

On remarque que, chaque cadre 2, 3 étant dépourvu de de toute arcade supérieure, aucune partie fixe ne se trouve devant la zone supérieure de l'oeil à maquiller (12, sur la figure 1; 11, sur la figure 3). Rien ne vient donc gêner l'utilisatrice pour maquiller ses cils ou ses paupières

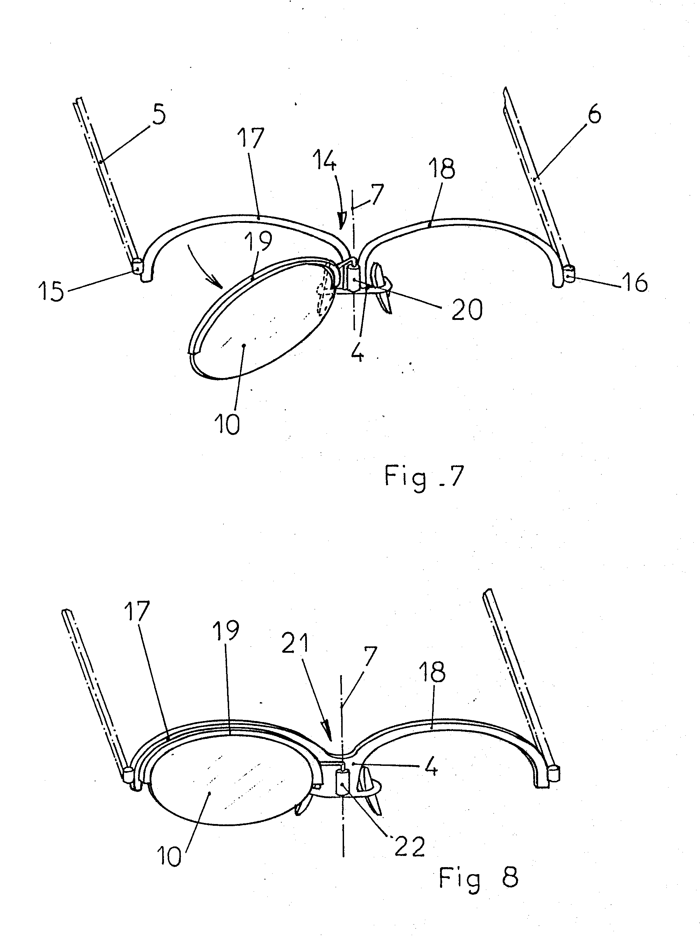

Dans la variante de la fig. 7, on a représenté une monture métallique 14 où la barrette du nez 4 est reliée aux charnières 15, 16 des branches 5 et 6 par des cadres de vision 17 et 18 dépourvus de toute partie inférieure. Autrement dit, chaque cadre de vision 17, 18 a un profil incurvé situé entièrement au-dessus du rayon visuel de l'oeil intéressé.

De plus, le cercle du verre d'oculaire 10 est ici réduit à une demi-traverse supérieure 19 reliée au pivot central 7 qui pivote dans un bossage avant 20 de la barrette de nez 4.

Dans la variante de la Fig. 8, on a représenté une monture 21 réalisée en écaille ou en matière plastique. Le bossage d'articulation 22 incorporé à la demi-traverse supérieure 19 de l'oculaire 10, peut pivoter autour du pivot 7 placé sur l'avant de la barrette de nez 4. La demi-traverse supérieure 19 de l'oculaire 10 est amenée par pivotement autour du pivot 7, en application soit contre le cadre de vision 17, fig . 8), soit contre le cadre de vision gauche 18. Ici encore, chacun des cadres de vision 17, 18 est dépourvu de toute partie inférieure et se trouve entièrement situé au-dessus des rayons visuels de l'utilisatrice.

## Revendications

1 - Paire de lunettes comportant une monture formée d'une face et de deux branches (5), (6), la face étant constituée par deux cadres (2), (3),- (17), (18), reliés au-dessus du nez par une barrette transversale horizontale (4), caractérisée en ce que, sur l'avant de la barrette (4) est prévu un pivot vertical (7) sur lequel est articulé un oculaire, (10) qui peut être ainsi rabattu à volonté vers la droite, devant l'oeil droit (11), ou vers la gauche, devant l'oeil gauche (12)

2 - Paire de lunettes suivant la revendication 1, caractérisée en ce que l'oculaire (10) possède, autour de son pivot (7) une amplitude de débattement supérieure ou égale à 180 degrés.

3 - Paire de lunettes suivant l'une quelconque des revendications précédentes, caractérisée en ce que le verre oculaire (10) est cerclé d'un cadre (9) qui l'entoure et comporte une patte (8) articulée sur le pivot (7)

4 - Paire de lunettes suivant la revendication 1, caractérisée en ce que chacun des deux cadres de vision (2), (3) de la face de la monture, relie la barrette de nez (4) à la branche (5), (6) qui lui correspond, uniquement par sa partie inférieure à profil incurvé alors qu'il ne possède aucune partie supérieure, si bien qu'aucune partie fixe ne se trouve devant la zone supérieure des yeux (11), (12), ce qui facilite l'observation ou le maquillage des cils ou des paupières.

5 - Paire de lunettes suivant la revendication 1, caractérisée en ce que chacun des deux cadres de vision (17), (18) de la face de la monture, relie la barrette du nez (4) à la branche (5), (6) qui lui correspond, uniquement par sa partie supérieure à profil incurvé, alors qu'il ne possède aucune partie inférieure, si bien qu'aucune partie fixe ne se trouve devant la zone inférieure des yeux (11 (12), ce qui facilite l'observation ou le maquillage de la partie correspondante du visage.

6 - Paire de lunettes suivant la revendication 5, caractérisée en ce que le verre oculaire (10) est cerclé d'un cadre qui se réduit à une demi-traverse supérieure (19) reliée au pivot avant central (7).

7 - Paire de lunettes suivant l'une quelconque des revendications précédentes, caractérisée en ce que le pivot (7) de l'oculaire (10) est porté par un bossage avant (20) de la barrette de nez (4).

0283409

Fig.1

Fig.4

0283409

11                    12

8 . 9 . 10

Fig . 2

9

10

2      3      Fig .5

0283409

Fig. 3

Fig. 6

0283409

Fig .7

Fig 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 495 898 (C. DEL VECCHIO) * Figure 8; résumé, colonne 3, lignes 6-20 * | 1-3 | G 02 C 9/00 |
| A | US-A-3 840 294 (D. KNEIER) * Colonnes 1,2 * | 1-3 | |
| A | FR-A-2 304 095 (PARODI et al.) * Pages 1,2 * | 1-3 | |
| A | FR-A-2 562 276 (H. GUILLET) * Revendications * | 1-3 | |

DOMAINES TECHNIQUES RECHERCHES (Int. Cl.4)

G 02 C 9/00
G 02 C 9/02

Le présent rapport a été établi pour toutes les revendications

| Lieu de la recherche | Date d'achèvement de la recherche | Examinateur |
|---|---|---|
| LA HAYE | 30-05-1988 | CALLEWAERT-HAEZEBROUCK H |

EPO FORM 1503 03.82 (P0402)